## Europäisches Patentamt
## European Patent Office
## Office européen des brevets

(19)

(11) Veröffentlichungsnummer: **0 051 060**
**A1**

(12) # EUROPÄISCHE PATENTANMELDUNG

(21) Anmeldenummer: **81890173.8**

(22) Anmeldetag: **20.10.81**

(51) Int. Cl.³: **C 04 B 43/02**
**B 32 B 5/20, C 08 J 9/00**
**//E04B1/90**

(30) Priorität: **27.10.80 AT 5297/80**

(43) Veröffentlichungstag der Anmeldung:
**05.05.82 Patentblatt 82/18**

(84) Benannte Vertragsstaaten:
**BE CH DE FR GB IT LI LU NL SE**

(71) Anmelder: **Österreichische Hiag-Werke**
**Aktiengesellschaft**
**Seybelgasse 20**
**A-1235 Wien(AT)**

(72) Erfinder: **Mayerhoffer, Herbert**
**Gluckgasse 2**
**A-1010 Wien(AT)**

(74) Vertreter: **Pawloy, Heinrich, Dr. et al,**
**Riemergasse 14**
**A-1010 Wien(AT)**

(54) **Isolierplatte sowie Verfahren zu deren Herstellung.**

(57) Isolierplatte, welche aus einem aminoplastischen Kunststoff und einer in diesen eingebetteten Faserverstärkung in Form eines über das ganze Plattenvolumen reichenden Mineralfaservlieses besteht. Zur Herstellung dieser Isolierplatte wird ein Mineralfaservlies mit aminoplastischem Kunstharz getränkt und danach das Ganze unter Energiezufuhr expandiert und gehärtet.

EP 0 051 060 A1

Croydon Printing Company Ltd.

- 1 -

## Isolierplatte sowie Verfahren zu deren Herstellung

Die Erfindung bezieht sich auf eine Isolierplatte aus expandiertem aminoplastischen Kunststoff, in den eine Mineralfaserverstärkung eingelagert ist.

Es ist bekannt, Isolierplatten mit geringer Wärmeleitfähigkeit und gutem Schallschluckvermögen auf Basis verschiedener expandierter bzw. ausgeschäumter Kunststoffe, darunter auch aminoplastischer Kunststoffe, herzustellen. Die bekannten aminoplastischen Schäume haben zwar verschiedene vorteilhafte Gebrauchseigenschaften, wie Geruchlosigkeit und günstiges Verhalten gegenüber Flammeneinwirkung, sind aber verhältnismäßig spröde und haben eine geringe mechanische Festigkeit. Man hat auch bereits versucht, die mechanischen Eigenschaften thermoplastischer Schäume durch Einlagern von Verstärkungsfasern zu verbessern und hat dazu kurze Fasern oder Schnitzel aus Fasermaterial der zu expandierenden Kunstharzmasse beigemischt. Dies kompliziert den Herstellungsvorgang von Isolierplatten bzw. Isolierkörpern, erhöht den Materialaufwand und das spezifische Gewicht der Isolierkörper und läßt in der Regel nur eine bescheidene Verbesserung der mechanischen Eigenschaften erzielen. Weiter hat man auch versucht, bei der Herstellung von Isolierplatten aus Kunstharzschäumen in die zu schäumende Kunstharzmasse flächige Fasergebilde, insbesondere Gewebe, einzulegen, wobei aber auch diese Maßnahme keine befriedigende Verbesserung der mechanischen Eigenschaften solcher Isolierkörper bzw. -platten bringt, da die Bindung solcher Einlagen mit dem Kunststoffschaum häufig unzuverlässig ist und eine Placierung einer solchen Einlage im Inneren einer Platte die mechanischen Eigenschaften im Oberflächenbereich nicht zu verbessern vermag, während ein Anordnen von Verstärkungen an der Oberfläche positive Eigenschaften der Schaumstruktur eliminiert.

Es ist ein Ziel der vorliegenden Erfindung, eine Isolierplatte eingangs erwähnter Art zu schaffen, welche gute Dämmeigenschaften gegenüber Wärme und Schall aufweist und gleichzeitig bei geringer Masse eine vergleichsweise gute Festigkeit besitzt und weiter auch eine gute Elastizität und Bearbeitbarkeit aufweist und auch eine im wesentlichen homogene Struktur hat. Weiter ist es Ziel der Erfindung, eine möglichst einfach durchführbare Technik zur Herstellung einer derartigen Platte zu schaffen.

Die erfindungsgemäße Platte eingangs erwähnter Art ist dadurch gekennzeichnet, daß die Mineralfaserverstärkung durch ein praktisch über das ganze Plattenvolumen in im wesentlichen gleichmäßiger Verteilung reichendes Mineralfaservlies, insbesondere Glasfaservlies, gebildet ist, dessen Fasern in den geschäumten Kunststoff eingelagert verlaufen, und daß vorzugsweise der aminoplastische Kunststoff ein Melaminharz oder ein melaminreiches aminoplastisches Kunstharz ist.

Durch die erfindungsgemäß vorgesehene Ausbildung der Isolierplatte kann der vorstehend angeführten Zielsetzung sehr gut entsprochen werden, und man erhält eine Platte mit einem im wesentlichen homogenen Gefüge und guter Elastizität, welche leicht auf beliebige Maße geschnitten werden kann und eine gute Druckfestigkeit aufweist, so daß Handhabung und Verlegung solcher Platten keine Probleme
verursachen, und wobei die Homogenität ergibt, daß Festigkeit und Stabilität im wesentlichen in beiden zueinander
senkrechten, der Flächenerstreckung der Platte folgenden
Richtungen gleich groß sind. Weiter hat die Platte gute
Wärme- und Schalldämmungseigenschaften und eine gute Feuchtigkeitsbeständigkeit.

Die bei der erfindungsgemäß ausgebildeten Isolierplatte
vorgesehene Ausbildung der Faserverstärkung in Form eines
praktisch über das ganze Plattenvolumen reichenden Mineralfaservlieses ergibt zusammen mit den anderen Merkmalen
dieser Platte wesentliche Vorteile hinsichtlich der Eigenschaften der Platte und hinsichtlich der Herstellung derselben. Es wird durch das in gleichmäßiger Verteilung in
praktisch allen Volumsbereichen der Platte vorliegende Faservlies nicht nur die mechanische Festigkeit an praktisch
jeder Stelle der Platte gegenüber in beliebigen Richtungen
wirksamen Kräften erhöht, sondern auch die Möglichkeit geschaffen, auf einfache Weise Isolierplatten mit sehr geringer Dichte und gleichmäßiger Struktur zu erhalten, da durch
das Faservlies auch eine Vergleichmäßigung der Verteilung
des expandierten aminoplastischen Kunststoffes erzielbar
ist.

Bei der Herstellung der Platte ist es von besonderem Vorteil, daß das Fasermaterial dadurch, daß es in Form eines
Faservlieses vorliegt, leicht handhabbar und mit geringem
Arbeitsaufwand mit dem aminoplastischen Kunstharz tränkbar
ist. Das getränkte Faservlies kann leicht in die Form eingeführt werden, in der das Expandieren und Erstarren bewirkt wird, wobei es keiner besonderen Vorkehrungen bedarf,
um eine gleichmäßige Verteilung des Faser- und des Kunststoffmaterials in dieser Form zu erhalten; es ergibt sich
bei der Tränkung des Faservlieses eine praktisch gleichförmige Verteilung des aminoplastischen Kunstharzes in diesem Faservlies und es behält das Kunstharz, auch solange
es noch flüssig ist, durch die im Vlies nach allen Richtungen verlaufenden Fasern diese gleichmäßige Verteilung im Faservlies bei, auch wenn dieses getränkte Vlies verschiedenen Manipulationen zum Einbringen in die Form unterworfen wird. Die gleichmäßige Verteilung des aminoplastischen Kunstharzes im Faservlies erlaubt die Herstellung von Isolierplatten geringer Dichte mit gleichmäßigen und guten mechanischen Eigenschaften.

Vorteilhaft wählt man die Dichte der Platte größer als 40 g/l, um eine gute mechanische Festigkeit zu erhalten; mit größer werdender Dichte bleibt die sehr gute Isolierfähigkeit gegen Wärmedurchgang erhalten und es ergibt sich zusätzlich eine sehr gute Festigkeit und Bearbeitbarkeit. Um den für die Herstellung der Platte erforderlichen Materialaufwand gering zu halten, sieht man dabei vorzugsweise vor, daß die Dichte der Platte kleiner als 100 g/l, insbesondere kleiner als 75 g/l, ist. Das Masseverhältnis Kunstharz zu Mineralfaservlies in der Platte wird vorteilhaft zwischen 1,5 : 1 und 0,7 : 1 gewählt. Mit zunehmendem Anteil der Mineralfasern wird das Gefüge der Platte dichter und es nimmt die Steifigkeit und Festigkeit der Platte zu; umgekehrt wird mit abnehmendem Mineralfaseranteil das Harzgefüge lockerer und es nimmt die Elastizität der Platte zu.

Das erfindungsgemäße Verfahren zur Herstellung einer wie vorgenannt ausgebildeten Isolierplatte ist dadurch gekennzeichnet, daß ein ungebundenes Mineralfaservlies, insbesondere Glasfaservlies, mit einer wässerigen Lösung eines Melamin-Formaldehyd-Harzes oder eines melaminreichen aminoplastischen Kunstharzes, welches mit einem Härter versetzt und auf Heißhärtung eingestellt ist, welche Lösung vorzugsweise ein Netzmittel und gegebenenfalls auch ein Schäummittel enthält, im Überschuß getränkt und danach der Anteil der im Faservlies verbleibenden Lösung durch Entfernen des Überschusses auf einen vorbestimmten Wert gebracht wird, daß danach das getränkte Faservlies in eine die Plattenform bestimmende Form eingebracht und die Harzlösung durch

- 5 -

Zufuhr von Energie, welche diese Lösung erwärmt, zum Expandieren und Erstarren gebracht wird und daß vorzugsweise die expandierten und erstarrten Platten einer Wärmenachbehandlung unterzogen werden.

Durch die vorgenannten Maßnahmen kann die erfindungsgemäße Platte rasch auf einfache Weise hergestellt werden. Man kann dabei vorteilhaft als Fasermaterial ein lockeres Mineral- bzw. Glasfaservlies mit einer Dichte von etwa 12 bis 15 kg/m³, wie es für Isolierzwecke allgemein verwendet wird, einsetzen. Dadurch, daß die Tränkung mit der Harzlösung im Überschuß vorgenommen wird, ergibt sich beim Tränkvorgang selbst keinerlei Dosierungsproblem, und man erhält durch den angewendeten Überschuß an Harzlösung auf einfache Weise eine gleichmäßige Tränkung des Vlieses; im Interesse einer gleichmäßigen Harzaufnahme des Vlieses ist dabei weiter die Verwendung eines Netzmittels angezeigt, wobei man ein solches Netzmittel vorteilhaft in einem Anteil von etwa 2 bis 5 %-Masse, bezogen auf den Festharzanteil der Harzlösung, anwendet. Besonders günstig ist dabei der Einsatz schaumbildender Netzmittel. Das Tränken des Faservlieses wird vorzugsweise durch Eintauchen in die Harzlösung vorgenommen, da so auf besonders einfache Weise eine Überschußtränkung erzielt werden kann. Es kommen aber auch andere Techniken zum Aufbringen der Harzlösung auf das Vlies in Frage.

Die überschüssige Harzlösung wird vom getränkten Faservlies vorteilhaft mittels Walzen abgequetscht; eine andere gangbare Technik besteht in einem Absaugen überschüssiger Harzlösung vom Faservlies. Beim Entfernen der überschüssigen Harzlösung wird unter Berücksichtigung der Harzkonzentration der Tränklösung das Verhältnis Kunstharz zu Mineralfaservlies in der Platte auf den vorgesehenen Wert eingestellt.

Die Einstellung der Dichte der Platte wird durch entsprechende Wahl der Höhe der Form, in die das getränkte Faservlies zum Expandieren gebracht wird, in Relation zur Flächenmasse des getränkten Faservlieses festgelegt.

Um das Schäumvermögen der Harzlösung möglichst gut auszunützen und geschäumte Körper mit möglichst guten mechanischen Eigenschaften zu erhalten, lenkt man vorzugsweise beim erfindungsgemäßen Verfahren den Expansions- und Erhärtungsvorgang der Harzlösung dahingehend, daß zunächst mit steigender Temperatur der Harzlösung das Lösungsmittel verdampft und damit die Harzlösung expandiert, wobei in diesem Stadium noch kein Erhärten des Harzes stattfinden soll, und so die volle Expansionsfähigkeit zur Verfügung steht; erst nach voller Expansion soll das Erhärten des Harzes in möglichst kurzer Zeit möglichst vollständig ablaufen.

Hiefür sieht man vorteilhaft vor, daß eine wässerige Harzlösung eingesetzt wird, deren temperaturabhängiges Härtungsverhalten durch Wahl des Härtertyps und des Härteranteils dahingehend eingestellt ist, daß ein Erhärten des Harzes erst oberhalb der Siedetemperatur des Wassers der Harzlösung erfolgt.

Sowohl für das Expandieren der Harzlösung als auch für den Ablauf des Tränkungsvorganges ist die Harzkonzentration der wässerigen Harzlösung von Bedeutung. Es ist dabei vorteilhaft, wenn die Konzentration der wässerigen Harzlösung auf einen zwischen 25 %-Masse und 55 %-Masse Festharz, vorzugsweise auf einen zwischen 30 %-Masse und 50 %-Masse Festharz liegenden Wert eingestellt wird. Weiterhin ist es für den Expansions- und Härtungsvorgang besonders vorteilhaft, wenn der wässerigen Harzlösung Zinkoxyd zugesetzt wird, wobei der Anteil des Zinkoxyds vorzugsweise zwischen 3 und 10 %-Masse, bezogen auf den Festharzgehalt der Harzlösung, liegt. Hiebei wirkt das Zinkoxyd als Startbeschleuniger dieser Vorgänge. Das Zinkoxyd kann dabei auch Bestandteil eines Harzzusatzes, wie z.B. eines Pigmentes oder eines Schäumungsmittels, sein.

- 7 -

Für den Ablauf der Härtungsreaktion und zum Erzielen eines
möglichst stabilen Harzgefüges in der fertigen Isolierplatte ist es weiter vorteilhaft, wenn eine wässerige Harzlösung verwendet wird, die ein aus Melamin und Formaldehyd
in einem zwischen 1 : 1,6 und 1 : 3 liegenden Molverhältnis gebildetes Harz enthält.

Im Interesse einer möglichst guten Elastizität des Harzgefüges der fertigen Isolierplatte sieht man weiter vorteilhaft vor, daß das in der zum Einsatz kommenden Harzlösung
vorliegende Harz eine Plastifizierungskomponente eingebaut hat und/oder daß die Harzlösung mit einem Weichmacher
versetzt ist.

Weiter ist es zum Erzielen eines möglichst festen und doch
elastischen Aufbaues der Kunstharzkomponente der Platte
günstig, wenn die zum Einsatz kommende Harzlösung mit einem Filmbildner, z.B. einer Acrylatdispersion, versetzt ist.

Der Expansions- und Erhärtungsvorgang wird vorteilhaft in
Formkästen ausgeführt, in die ein entsprechend großes
Stück des mit der Harzlösung getränkten Faservlieses eingelegt wird. Man kann diese Formkästen dann in einer Heizkammer oder einer Heizstrecke anordnen, z.B. in einer Heißluftkammer, in welcher eine Temperatur von etwa 180 bis
220°C aufrechterhalten wird, um das in den Formkästen befindliche Faservlies zu erwärmen, wobei im Zuge dieses Erwärmungsvorganges die Harzlösung, mit der das Faservlies
getränkt ist, durch Sieden des Lösungsmittels und/oder
durch Gasabgabe eines Schäummittels, das der Harzlösung
zugesetzt wurde, expandiert und danach durch entsprechende
Einstellung eines in der Harzlösung vorliegenden Härters
erhärtet. Die Beigabe eines Schäummittels, z.B. eines Azodicarbonsäureamids, welches, um die Ansprechtemperatur
herabzusetzen, zusätzlich noch einen geeigneten Starter,
wie Zinkoxyd, enthält, ist dabei in vielen Fällen vorteilhaft, aber nicht unbedingt erforderlich. Die Ansprechtem-

- 8 -

peratur solcher Schäummittel soll im Bereich von 100 bis 150°C liegen.

Um einerseits eine gute Expansion der Harzlösung ohne Behinderung durch eine bereits beginnende Härtung zu erhalten, und andererseits diese Expansion ohne Schwierigkeiten bis zum Wirksamwerden der Härtung aufrechtzuerhalten, ist es vorteilhaft, Formen bzw. Formkästen einzusetzen, bei denen das Entweichen des die Harzlösung expandierenden Gases oder Dampfes verlangsamt und ohne Überhöhung des Druckes in der Form möglich ist.

Weiter ist es vorteilhaft, das Härtungsverhalten der Harzlösung mit einem geeigneten Härter so einzustellen, daß der Härtungsvorgang nach dem Aufschäumen sehr schnell einsetzt und abläuft. Hiefür hat sich als Härter der Einsatz von Aminsalzen der p-Toluolsulfonsäure gut bewährt, wobei vorzugsweise Härteranteile von 2 bis 5 %-Masse, bezogen auf den Festharzanteil in der Harzlösung, eingesetzt werden.

Das expandierte Material muß solange in der Form bleiben, bis das expandierte Harz hinreichend gehärtet ist, um auch ohne die Haltewirkung des die Expansion bewirkenden Gases oder Dampfes seine Form praktisch nicht mehr zu verändern. Man kann dabei die vollständige Aushärtung in der Form vornehmen oder außerhalb der Form mittels einer thermischen Nachbehandlung. Eine solche Nachbehandlung empfiehlt sich meist auch, um die nach dem Erhärten in der Platte noch vorhandene überschüssige Feuchtigkeit auszutreiben. Eine solche Wärmenachbehandlung kann man vorteilhaft mittels Heißluft vornehmen, wobei man die Isolierplatten auf eine Temperatur von etwa 100 bis 150°C erwärmt.

Eine bevorzugte Ausführungsform des erfindungsgemäßen Verfahrens sieht hinsichtlich des Ausschäumens und Härtens vor, daß das getränkte Faservlies zur Zufuhr von Energie zur Expansion des Harzes der Einwirkung eines elektrischen Mikrowellenfeldes unterworfen und nach dem Erstarren vorzugsweise einer Wärmenachbehandlung mittels Heißluft unterzogen wird. Bei dieser Ausführungsform des erfindungsgemäßen Verfahrens ergibt sich vor allem der Vorteil, daß das Expandieren und Erhärten des Harzes im Zuge der Herstellung der Isolierplatte wesentlich schneller als bei einer Beheizung des Materials mittels Wärmeleitung durchgeführt werden kann, da das elektrische Mikrowellenfeld eine über das ganze Volumen des Materials verteilte Wärmeentwicklung hervorruft und damit vor allem die inneren Zonen viel rascher auf eine zum Schäumen und Erhärten ausreichende Temperatur gebracht werden können als durch Wärmeleitung von außen her, die ja durch bereits expandierte und damit schlecht wärmeleitende Außenschichten hindurch zum Kern des Materials erfolgen muß, was durch die schlechte Wärmeleitung der expandierten Außenschichten nur langsam vor sich geht. Es ergibt sich dabei durch den Einsatz von Mikrowellenenergie zur Expansion und Aushärtung des Harzes eine sehr gleichmäßige Temperaturverteilung im zu härtenden Material, was sich auch in einer gleichmäßigen Expansion und Durchhärtung manifestiert und in kurzer Zeit Isolierplatten hoher Qualität herzustellen erlaubt. Da das Expandieren des Materials und das nachfolgende Erhärten unter Einsatz von Mikrowellenenergie besonders rasch durchgeführt werden kann, während das Abführen der im Material vorliegenden Feuchtigkeit vergleichsweise mehr Zeit beansprucht, ist es insbesondere beim Expandieren und Erhärten mittels Mikrowellen vorteilhaft, die erhärteten Platten einer Wärmenachbehandlung mittels Heißluft zu unterziehen.

Die Erfindung wird nun unter Bezugnahme auf Beispiele weiter erläutert.

B e i s p i e l  1 : Für die Herstellung einer erfindungsgemäßen Isolierplatte wurde folgende Harzlösung hergestellt:

1000 g eines handelsüblichen Papiertränkungs-Melaminharzes mit einem Festharzgehalt von 55 %-Masse

500 g Wasser

- 10 -

50 g Netzmittel (Cyclopol)

50 g Schäummittel (Genitron EPC)

25 g Acrylatdispersion (Plextol BV 410)

12 g Härter (Aminsalz der p-Toluolsulfonsäure).


Mit dieser Harzlösung wurde ein loses Glasfaservlies mit einer Raummasse von etwa 15 kg/m³ (Flächenmasse etwa 2,3 kg/m²) vollständig getränkt und hierauf zwischen zwei Walzen so weit abgequetscht, daß das getränkte Glasfaservlies eine Flächenmasse von 12 kg/m² aufwies. Das imprägnierte Glasfaservlies wurde dann in Formkästen gegeben, welche eine Höhe von 10 cm hatten. Durch Einwirkung von Mikrowellen wurde das getränkte Fasermaterial expandiert und anschließend erhärtet. Es wurde dabei eine Mikrowellenleistung von etwa 15 kWh/m² Bodenfläche der Form 5 min lang zugeführt, wobei in dieser Zeit das Material zur Expansion und zum Anspringen der Härtung gebracht wurde. Anschließend wurde das Material noch 2 min ohne weitere Energiezufuhr in der Form belassen, wobei eine vollständige Aushärtung des Melaminharzes eintrat. Danach wurde die so gebildete Platte der Form entnommen und einer Wärmenachbehandlung mit Heißluft, wobei die Platte auf 100 bis 120°C erwärmt wurde, unterworfen. Durch diese Behandlung wurde die Platte durchgetrocknet. Die fertige Isolierplatte hatte eine Dichte von ca. 65 kg/m³.


B e i s p i e l  2 : Für die Herstellung einer erfindungsgemäßen Isolierplatte wurde folgende Harzzubereitung hergestellt:


1000 g eines Melamin-Formaldehyd-Kondensates mit einem Molverhältnis von 1 : 2,3 und 60 % Festharzgehalt

600 g Wasser

60 g Netzmittel

60 g Diäthylenglykol

50 g Zinkoxyd

20 g Härter (Kombination eines Aminsalzes der p-Toluolsulfonsäure und eines Aminhydrochlorids).

Mit dieser Harzlösung wurde ein loses Glasfaservlies mit
einer Raummasse von ca. 12 kg/m³ (Flächenmasse etwa 2 kg/m²)
vollständig getränkt und hierauf zwischen zwei Walzen so
weit abgequetscht, daß das getränkte Glasfaservlies eine
Flächenmasse von 8 kg/m² aufwies. Das imprägnierte Glasfaservlies wurde dann in Formkästen gegeben, welche eine Höhe
von 8 cm aufwiesen. Die Formkästen wurden dann 35 min lang
einer Behandlung mit Heißluft von 200°C ausgesetzt, wobei
das getränkte Fasermaterial expandierte und anschließend
aushärtete. Die so gebildeten Platten wurden dann der Form
entnommen. Eine anschließende Trocknung brauchte nicht mehr
zu erfolgen. Die fertige Isolierplatte hatte eine Raummasse
von 50 kg/m³.

B e i s p i e l   3   : Für die Herstellung einer erfindungsgemäßen Isolierplatte wurde ein melaminreiches Aminoplast
in Form eines Melaminharzes verwendet, bei dem 10 Mol-% des
Melaminanteiles durch Harnstoff ersetzt waren. Dieses Melaminharz hatte einen Festharzgehalt von 60 % und enthielt
8 %, bezogen auf das flüssige Harz, an Plastifizierungsmitteln. Mit diesem Harz wurde für die Tränkung eines Glasfaservlieses mit einer Raummasse von etwa 12 kg/m³ (Flächenmasse etwa 1,8 kg/m²) nachstehende Harzlösung hergestellt:

1000 g Harz
 500 g Wasser
  50 g Netzmittel
  20 g Acrylatdispersion
  35 g Zinkoxyd
  15 g Härter (Aminsalz der p-Toluolsulfonsäure).

Das imprägnierte Glasfaservlies wurde auf eine Flächenmasse
von ca. 5,5 kg/m² abgequetscht, in eine Form mit einer Höhe
von 5 cm gegeben und durch Einwirkung von elektrischer
Mikrowellenenergie expandiert und ausgehärtet. Dabei wurde
eine Mikrowellenleistung von 15 kWh/m² 3,5 min lang einwirken gelassen und hierauf 2 min ohne weitere Energiezufuhr in der Form nachhärten gelassen. Anschließend wurde

- 12 -

die so hergestellte Isolierplatte bei 120 bis 140°C mittels
Heißluft getrocknet. Die fertige Isolierplatte wies eine
Raummasse von 62 kg/m³ auf.

- Patentansprüche -

- 13 -

Patentansprüche :

1. Isolierplatte aus expandiertem aminoplastischen Kunststoff, in den eine Mineralfaserverstärkung eingelagert ist, dadurch gekennzeichnet, daß die Mineralfaserverstärkung durch ein praktisch über das ganze Plattenvolumen in im wesentlichen gleichmäßiger Verteilung reichendes Mineralfaservlies, insbesondere Glasfaservlies, gebildet ist, dessen Fasern in den geschäumten Kunststoff eingelagert verlaufen, und daß vorzugsweise der aminoplastische Kunststoff ein Melaminharz oder ein melaminreiches aminoplastisches Kunstharz ist.

2. Isolierplatte nach Anspruch 1, dadurch gekennzeichnet, daß die Dichte der Platte größer als 40 g/l und vorzugsweise kleiner als 100 g/l ist.

3. Isolierplatte nach Anspruch 1 oder 2, dadurch gekennzeichnet, daß die Dichte der Platte kleiner als 75 g/l ist.

4. Isolierplatte nach einem der Ansprüche 1 bis 3. dadurch gekennzeichnet, daß das Masseverhältnis Kunstharz zu Mineralfaservlies in der Platte zwischen 1,5 : 1 und 0,7 : 1 liegt.

5. Verfahren zur Herstellung einer Isolierplatte nach einem der vorhergehenden Ansprüche, dadurch gekennzeichnet, daß ein ungebundenes Mineralfaservlies, insbesondere Glasfaservlies, mit einer wässerigen Lösung eines Melamin-Formaldehyd-Harzes oder eines melaminreichen aminoplastischen Kunstharzes, welches mit einem Härter versetzt und auf Heißhärtung eingestellt ist, welche Lösung vorzugsweise ein Netzmittel und gegebenenfalls auch ein Schäummittel enthält, im Überschuß getränkt und danach der Anteil der im Faservlies verbleibenden Lösung durch Entfernen des Überschusses auf einen vorbestimmten Wert gebracht wird, daß danach das getränkte Faservlies in eine die Plattenform bestimmende Form eingebracht und die Harzlösung durch Zufuhr von Energie, welche diese Lösung erwärmt, zum Expandieren und Erstarren gebracht wird, und daß vorzugsweise die expandierten und erstarrten Platten einer Wärmenachbehandlung unterzogen werden.

6.     Verfahren nach Anspruch 5, dadurch gekennzeichnet, daß der wässerigen Harzlösung Zinkoxyd zugesetzt wird, wobei der Anteil des Zinkoxyds, bezogen auf den Festharzgehalt der Harzlösung, vorzugsweise zwischen 3 und 10 %-Masse liegt.

7.     Verfahren nach Anspruch 5 oder 6, dadurch gekennzeichnet, daß eine wässerige Harzlösung eingesetzt wird, deren temperaturabhängiges Härtungsverhalten durch Wahl des Härtertyps und des Härteranteils dahingehend eingestellt ist, daß ein Erhärten des Harzes erst oberhalb der Siedetemperatur des Wassers der Harzlösung erfolgt.

8.     Verfahren nach einem der Ansprüche 5 bis 7, dadurch gekennzeichnet, daß die Konzentration der wässerigen Harzlösung auf einen zwischen 25 %-Masse Festharz und 55 %-Masse Festharz liegenden Wert, vorzugsweise auf einen zwischen 30 %-Masse Festharz und 50 %-Masse Festharz liegenden Wert, eingestellt wird.

9.     Verfahren nach einem der Ansprüche 5 bis 8, dadurch gekennzeichnet, daß eine wässerige Harzlösung eingesetzt wird, die ein aus Melamin und Formaldehyd in einem zwischen 1,6 und 3,0 liegenden Molverhältnis gebildetes Harz enthält.

10.    Verfahren nach einem der Ansprüche 5 bis 9, dadurch gekennzeichnet, daß das in der zum Einsatz kommenden Harzlösung vorliegende Harz eine Plastifizierungskomponente eingebaut hat und/oder die Harzlösung mit einem Weichmacher versetzt ist.

11.    Verfahren nach einem der Ansprüche 5 bis 10, dadurch gekennzeichnet, daß eine Harzlösung eingesetzt wird, die einen Filmbildner, z.B. eine Acrylatdispersion, enthält.

12.    Verfahren nach einem der Ansprüche 5 bis 11, dadurch gekennzeichnet, daß eine Harzlösung eingesetzt wird, die, bezogen auf den Festharzgehalt, 2 bis 5 %-Masse eines Netzmittels enthält.

13.    Verfahren nach einem der Ansprüche 5 bis 12, dadurch gekennzeichnet, daß das Tränken des Faservlieses durch Eintauchen in die Harzlösung vorgenommen wird.

14.    Verfahren nach einem der Ansprüche 5 bis 13, dadurch gekennzeichnet, daß die überschüssige Harzlösung vom getränkten Faservlies mit Walzen abgequetscht wird.

15.    Verfahren nach einem der Ansprüche 5 bis 14, dadurch gekennzeichnet, daß das getränkte Faservlies zur Zufuhr von Energie zur Expansion des Harzes der Einwirkung eines elektrischen Mikrowellenfeldes unterworfen und nach dem Erstarren vorzugsweise einer Wärmenachbehandlung mittels Heißluft unterzogen wird.

**Europäisches Patentamt**

# EUROPÄISCHER RECHERCHENBERICHT

Nummer der Anmeldung

EP 81 89 0173.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A1 - 0 000 402 (SAINT-GOBAIN INDUSTRIES) <br> * Anspruch 10; Seite 11, Zeilen 11 bis 12 * <br> -- | 7,15 |
| | EP - A3 - 0 004 053 (CASSELLA AG) <br> * Ansprüche 6, 8 * <br> -- | 9 |
| | DE - A - 2 255 454 (BAYER AG) <br> * Ansprüche 1, 8, Seite 4, Absatz 4, Seite 8, Absatz 2; Fig. 2 * <br> -- | 1-3 |
| | US - A - 2 419 440 (J. DELMONTE) <br> * Spalte 1, Zeilen 42 bis 43; Spalte 2, Zeilen 3 bis 5, 14 bis 17, 20, 31 bis 35; Spalte 3, Zeilen 36 bis 41, 62 bis 66 * <br> -- | 1,5,8 |
| | US - A - 3 092 247 (R.K. WOODRUFF) <br> * Spalte 2, Zeilen 12 bis 23, 34 bis 36, 66 bis 67; Spalte 3, Zeilen 6 bis 8, 32 bis 34, 66 bis 71; Spalte 4, Zeilen 1 bis 5, 31; Spalte 5, Zeilen 71 bis 72 * <br> -- | 1,5,7, 11 |
| | US - A - 3 666 711 (C.E.M. MORRIS) <br> * Spalte 2, Zeilen 7 bis 12, 41 bis 49; Spalte 3, Zeilen 3 bis 6 * <br> -- <br> ./.. | 1,5,12 |

### KLASSIFIKATION DER ANMELDUNG (Int. Cl.³)

C 04 B    43/02
B 32 B    5/20
C 08 J    9/00
//E 04 B    1/90

### RECHERCHIERTE SACHGEBIETE (Int. Cl.³)

B 32 B    5/00
B 32 B    17/00
C 04 B    43/00
C 08 J    5/00
C 08 J    9/00
C 08 K    7/00
C 08 L    61/00
E 04 B    1/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 21-12-1981 | STROUD |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 756 839 (R.P. RAO)<br>* Ansprüche 5 bis 7 *<br>-- | 12,15 |
| | US - A - 4 175 155 (J. BIRANOWSKI et al.)<br>* Ansprüche 1 bis 3; Spalte 6, Zeilen 36 bis 52 *<br>-- | 1,7 |
| | GB - A - 882 296 (OWENS-CORNING FIBERGLASS CORP.)<br>* Ansprüche 1, 2, 5 bis 7; Seite 2, Zeilen 38 bis 47, 89; Seite 3, Zeilen 29 bis 36, 120 bis 127; Seite 4, Zeilen 122 bis 127; Seite 6, Zeilen 25 bis 31 *<br>-- | 1,5 |
| A | GB - A - 1 411 148 (ICI LTD.)<br>* Ansprüche 1, 4; Seite 1, Zeilen 36 bis 38 *<br>---- | |

**KLASSIFIKATION DER ANMELDUNG (Int. Cl.³)**

**RECHERCHIERTE SACHGEBIETE (Int. Cl.³)**